# EUROPEAN PATENT SPECIFICATION

(11) **EP 3 276 207 B1**
(45) Date of publication and mention of the grant of the patent: **17.02.2021**
(21) Application number: 17182639.9
(22) Date of filing: 21.07.2017
(51) Int. Cl.: F16H 25/24, A61G 3/06, B60P 1/43

(54) **LEAD SCREW MECHANISM**
LEITSPINDELMECHANISMUS
MÉCANISME DE VIS À ROULEAUX

(30) Priority: 26.07.2016 GB 201612933
(43) Date of publication of application: 31.01.2018
(73) Proprietor: Truck Align London Limited, London SE7 7RY (GB)
(72) Inventor: RANSLEY, David Allan, Charlton, London SE7 7RY (GB); GAMALLO, Diego Rodriguez, Charlton, London SE7 7RY (GB); ALLEN, Lee, Charlton, London SE7 7RY (GB)
(74) Representative: Hancox, Jonathan Christopher

(56) References cited:
- EP-A1- 1 034 088
- EP-A2- 2 942 547
- US-A- 6 142 447

## Description

### Technical Field

The present invention relates to a vehicle access ramp comprising a lead screw.

### Background

Lead screw mechanisms are used to translate rotary motion into linear motion. They can be employed in actuator or positioner mechanisms, and typical applications are in linear actuators and machine slides in machine tools.

One example of the use of a lead screw mechanism as a linear actuator is in a vehicle access ramp. Such ramps typically comprise a platform which extends from the doorway floor of a vehicle to the ground or kerb, to provide an access ramp for wheelchair users, pushchairs, etc. or for mobility-impaired passengers to gain entry to the vehicle more easily. Access ramps can be found on a wide variety of vehicles including trains, trams, buses, minibuses, taxis and cars.

In normal use, the platform is extended or retracted under power, for example by means of a motor such as an electric motor, or hydraulically or by compressed air if the vehicle has a supply.

In the case of an electric motor, the motor is typically mounted under the vehicle floor in or adjacent to the ramp housing. The power source drives one or two lead screws which extend the depth of the platform housing, parallel to the direction of travel of the platform. The or each lead screw has an exterior thread along its length. The platform is mounted onto the lead screw via a correspondingly internally-threaded mounting (effectively a "nut") which, when the lead screw rotates, causes the mounting to travel up or down the lead screw and therefore the platform to extend from or retract into the housing.

Vehicles with powered access ramps are also required to have a manual means of extending or retracting the ramp, in the event of failure of the power source, drive or control system or in the event of a vehicle power failure. The manual system usually comprises a ratchet tool which the operator attaches to an exposed end of the lead screw, to manually rotate the lead screw and extend or retract the ramp. One problem with this method of manual operation is that the ratchet tool is separate from the ramp and the operator may not know where it is stored on the vehicle, or it may have become lost. Another problem is that the drive train has to be operated by applying the turning force at the opposite end of the mechanism, which it is not designed for, and which requires force to turn the lead screw against any gears and the power source such as the motor or other drive mechanism. This, combined with the fact that the exposed end of the lead screw will be low down on the vehicle requiring the operator to bend or kneel down, makes the ratcheting operation time-consuming and physically difficult. A vehicle access ramp of this type is disclosed in EP 1034088 A1.

A translation block with a disengaging nut for a screw-mounted lifting mechanism is disclosed in US 6,142,447.

In other applications of lead screw mechanism, it may be also be desirable to provide a way of moving the mechanism manually without having to turn the lead screw by hand. As well as providing a means of operation in the event of a power failure as described above, this may allow the mechanism to be moved more quickly, such as to provide an initial "coarse" means of adjustment or to bring the mechanism quickly to its home position.

### Summary of the Invention

The invention provides a vehicle access ramp according to claim 1. The dependent claims define particular embodiments of the invention as defined in claim 1.

A preferred arrangement, not mentioned in the claims, for preventing axial movement of the insert relative to the housing is by means of a circlip arrangement, although any other suitable arrangement may be employed.

For ease of access by the operator, according to a preferred arrangement not mentioned in the claims, the control handle is mounted on the front edge of the platform although it could be in any other suitable position.

The vehicle access ramp according to the invention as defined in claim 1 may comprise one or more lead screws. Other support means may be provided in addition to the lead screw to support or guide the platform during operation. Preferably, two lead screws are provided, which are preferably located at or near the transverse edges of the support frame, with the platform substantially in between. On each lead screw may be mounted a platform as mentioned in the claims, including the housing, insert and lock mechanism. Separate lock control mechanisms as described above may be provided for each lock, but preferably a single lock control mechanism releases both locks substantially simultaneously. In a preferred embodiment, the lock control mechanism takes the form of a single control handle connected to each lock by a Bowden-type cable (i.e. two Bowden-type cables) as in the preferred embodiment of the Detailed Description below.

In a preferred embodiment, according to claim 5, the platform is mounted to the or each housing via a yoke. This allows the platform movement to deviate from being exactly parallel to the lead screw and allows a certain degree of twisting of the platform in the support frame to be tolerated without putting stress on the housing and insert arrangement.

The vehicle access ramp, according to a preferred arrangement not mentioned in the claims, further comprises an electric motor for rotating the lead screw. In alternative embodiments, the lead screw may be rotated by means of a hydraulic fluid or compressed air supply.

As stated above, in the extended position, the platform extends from the storage space. Depending on the application, this could be a part of the platform, a substantial part of the platform or the entire platform. The extent to which the platform extends from the storage space in the extended position is not relevant to the invention, as the skilled person will understand.

The present invention provides a vehicle access ramp having a mechanism to manually release or disconnect the mounting from the lead screw. In the vehicle access ramp of the invention, with the lock in the released position, the insert is free to rotate relative to the housing, so the platform can be moved in or out by hand, moving the housing along the axial direction of the lead screw while the insert rotates around the lead screw thread relative to the housing. Since this manual operation does not require rotation of the lead screw itself and it disconnects the housing from the lead screw, drive train and motor, less force is required and the operation is much quicker than with the ratchet system of the prior art. No separate tools or winding mechanisms are required, and the vehicle operator has to spend less time bending at a low level to manually operate the ramp.

### Brief Description of the Drawings

An embodiment of the invention will now be described by way of example only and with reference to the accompanying drawings, in which:
Fig. 1 shows a perspective view of a vehicle access ramp in accordance with the invention, with the platform partially extended;
Fig. 2 shows an enlarged view of the circled area C in Fig. 1;
Fig. 3 shows an exploded component diagram of a platform mounting in accordance with the invention;
Fig. 4 shows a cross-sectional view of a platform mounting in accordance with the invention;
Fig. 5 shows a plan view of the platform; and
Fig. 6 shows an underneath view of a vehicle access ramp in accordance with an embodiment of the invention, with the platform fully extended.

### Detailed Description of a Preferred Embodiment

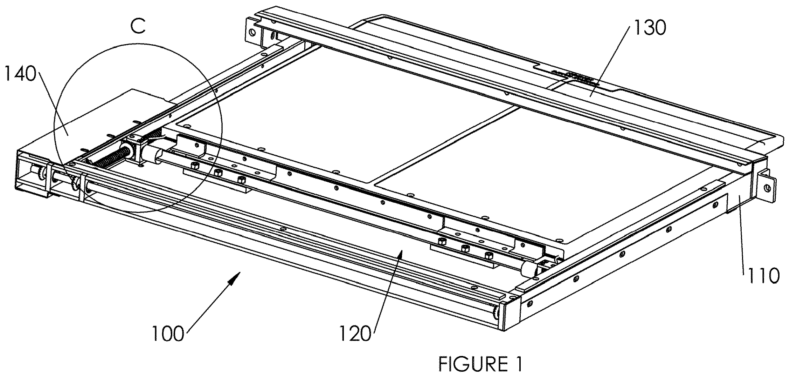

Fig. 1 shows a vehicle access ramp unit 100 having a support frame 110 defining a storage space 120 for a platform 130 when the platform is in the retracted position. The access ramp is also provided with a motor located in a side housing 140. The access ramp 100 is supplied for fitting to a vehicle and will be fitted just under the vehicle entrance floor. In this view, the vehicle floor (or the top cover of the access ramp unit) is not shown for clarity, so that the components can be seen.

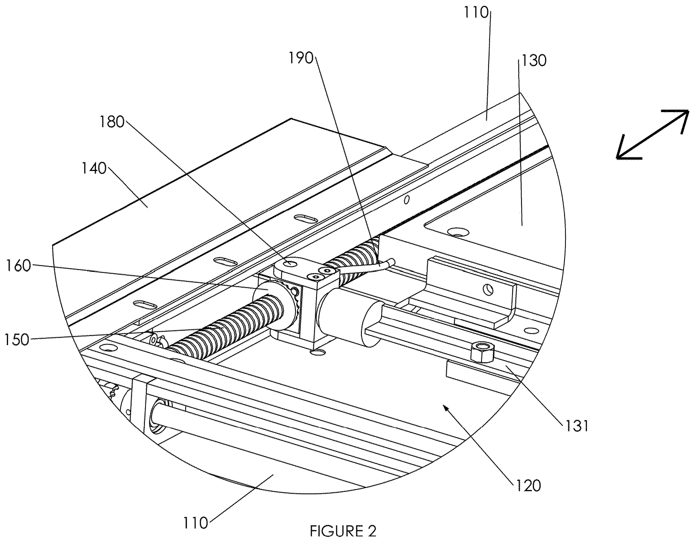

Fig. 2 shows an enlarged view of the circled area C in Fig. 1, showing more details of the platform extension and retraction mechanism. The mechanism comprises a lead screw 150, internally-threaded platform mounting 160 and yoke 180. Yoke 180 is connected to platform 130 by means of platform frame section 131. Through rotation of the lead screw 150 by the motor, the mounting 160, yoke 180 and therefore platform 130 can be moved backwards and forwards in the direction of the double-headed arrow to extend or retract the platform. A similar platform extension and retraction mechanism is provided on the other side of the support frame 110. Lock control cable 190 is also shown in this figure, and will be discussed later.

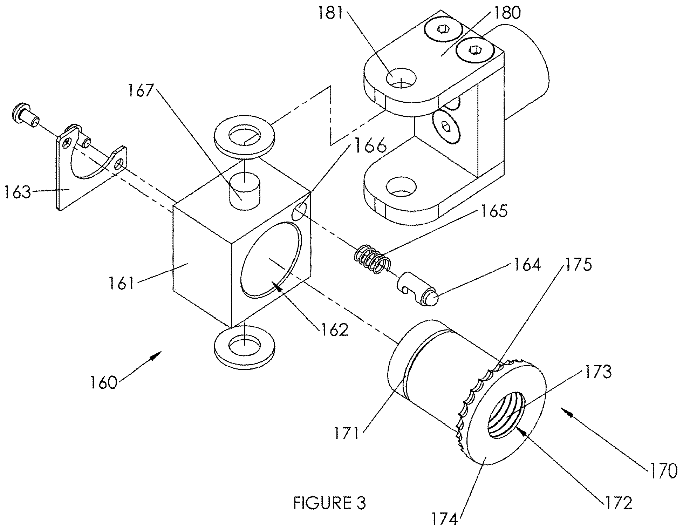

With reference to Fig. 3, the components of mounting 160 will be described in more detail. Mounting 160 comprises a housing 161 having a generally cuboid shape with a cylindrical passage 162 through the centre. An internally-threaded insert 170 fits into passage 162 and in the absence of any restraining mechanism is able to rotate within the passage about the axis of the passage. When assembled, insert 170 is prevented from lateral movement along the axis relative to the mounting by means of circlip plate 163 which is secured to the rear side of housing 161 and engages groove 171 of the insert 170.

Insert 170 has a generally cylindrical body with a cylindrical passage 172 which is provided with an internal thread 173. When assembled, the lead screw, housing passage 162 and insert passage 172 are co-axial. The insert also has a flange 174, on the inner face of which is provided a plurality of recesses 175. Recesses 175 engage with projection or "bullet" 164 which is sprung-loaded by means of spring 165 and locates in bore 166, offset to the side of the main passage 162. Bullet or projection 164 acts as a lock, as will be described below.

Yoke 180 is also shown in Fig. 3, and a degree of relative movement between yoke 180 and housing 160 is possible by means of pins 167 cooperating with round holes 181.

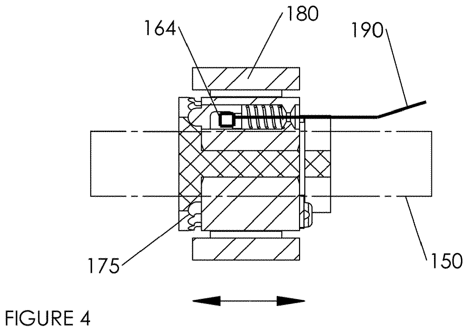

Fig. 4 shows the assembled mechanism in cross-section. This figure also shows lock control cable 190 which is connected to projection 164. When there is no force applied to projection 164 by the cable 190, the spring 165 urges projection 164 into engagement with a recess 175 in the flange of the insert. Because the projection extends from the recess into the bore 166, it serves to lock the housing and insert together and insert 170 is not able to rotate relative to the housing. Therefore, rotation of the lead screw 150 will cause the mounting 160 to move backwards or forwards in the direction of the double-headed arrow to extend or retract the platform.

A force can be applied to projection 164 by the cable 190 to retract the projection against the force of the spring 165, so that the insert is not locked to the housing and is therefore free to rotate relative to the housing. In this unlocked or released position, a force can be applied to the platform 130 in either direction of the arrow to move the platform in or out by hand, which causes the housing to travel along the lead screw while the insert rotates around the lead screw thread relative to the housing.

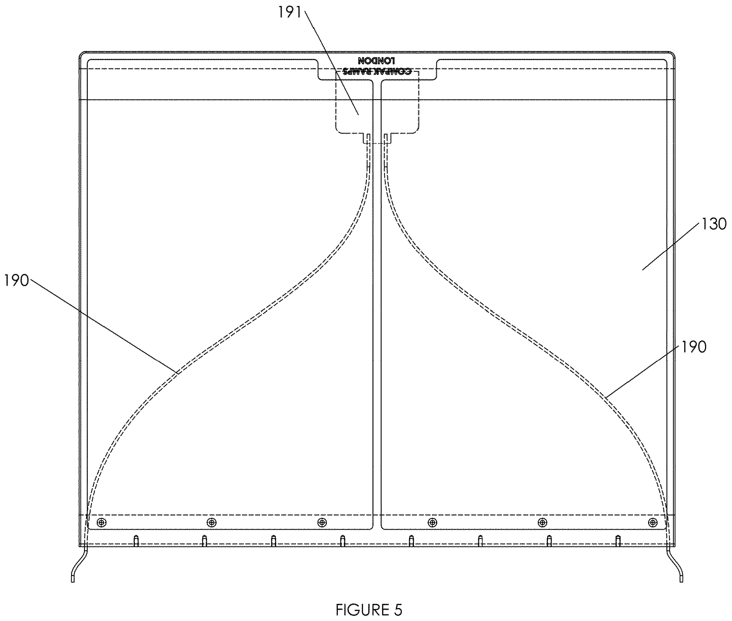

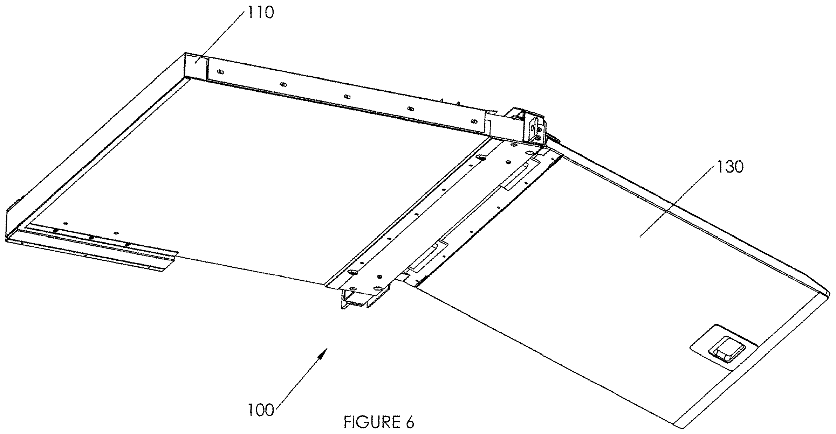

The lock release mechanism is shown in more detail in Figs. 5 and 6. Two Bowden-type cables 190 are shown, which are connected to projections 164 in mountings 160 on each side of the ramp unit 100. The outer ends of the cables are connected to handle 191 which is located on the underside of platform 130. By gripping the platform and squeezing handle 191, projections 164 are released from engagement with the inserts 170 and the platform can be manually extended or retracted as required. Releasing the handle re-engages the projections with the inserts and the platform is then held in the new position (e.g. extended or retracted) by the extension and retraction mechanism.

## Claims

1. A vehicle access ramp (100) comprising:
a support frame (110) defining a storage space (120);
a platform (130) movable from a retracted position in which the platform is substantially within the storage space to an extended position in which the platform extends from the storage space; and
a lead screw (150) having a longitudinal axis and an external thread which is rotatably mounted in the storage space to the support frame (110) and which extends in the direction of movement of the platform, onto which the platform (130) is mounted by means of an internally-threaded mounting (160) such that, when the lead screw rotates, the mounting (160) travels along the lead screw and moves the platform towards the extended position or the retracted position,
**characterised in that** the mounting (160) comprises a housing (161), an internally-threaded insert (170) rotatably mounted in the housing and engaging with the lead screw, and a lock, the lock having a locked position in which the insert (170) is rotatably fixed relative to the housing (161) and a released position in which the insert is able to rotate in the housing, wherein the lock comprises a projection (164) retractably mounted in the housing (161) which, in the locked position, engages with one or more recesses (175) provided on a flange (174) on the insert (170) to lock the housing and insert together, and which is retracted in a direction parallel to the longitudinal axis of the lead screw to the released position to permit the insert to rotate relative to the housing, and wherein the projection (164) is urged towards the locked position by means of a spring (165).

2. The vehicle access ramp of claim 1, wherein the housing (161) has a cylindrical passage (162) in which the insert (170) is located and the insert has a cylindrical passage (172) which is internally-threaded and in which the lead screw is located, and wherein the lead screw (150), the housing passage (162) and the insert passage (172) are coaxial.

3. The vehicle access ramp of any preceding claim, further comprising a lock control mechanism for moving the lock between the locked and released positions, wherein the lock control mechanism comprises a control handle (191) connected to the lock by means of a cable (190).

4. The vehicle access ramp of claim 3, further comprising two lead screws (150), two platform mountings (160) and two locks, and wherein the lock control mechanism releases both locks substantially simultaneously.

5. The vehicle access ramp of any preceding claim, wherein the platform is mounted to the housing via a yoke (180).

6. A vehicle including the vehicle access ramp of any preceding claim.

## Patentansprüche

1. Fahrzeugauffahrtrampe (100) mit:
einem Tragrahmen (110), der einen Stauraum (120) definiert;
einer Plattform (130), die aus einer eingefahrenen Position, in der sich die Plattform im Wesentlichen im Stauraum befindet, in eine ausgefahrenen Position bewegbar ist, in der sich die Plattform aus dem Stauraum erstreckt; und
einer Leitspindel (150) mit einer Längsachse und einem Außengewinde, die drehbar im Stauraum am Tragrahmen (110) befestigt ist und sich in der Bewegungsrichtung der Plattform erstreckt und auf der die Plattform (130) mittels einer Innengewindebefestigung (160) befestigt ist, so dass, wenn sich die Leitspindel dreht, die Befestigung (160) entlang der Leitspindel verläuft und die Plattform zur ausgefahrenen Position oder zur eingefahrenen Position bewegt,
**dadurch gekennzeichnet, dass** die Befestigung (160) ein Gehäuse (161), einen Innengewindeeinsatz (170), der drehbar im Gehäuse befestigt ist und mit der Leitspindel zusammengreift, und eine Verriegelung aufweist, wobei die Verriegelung eine verriegelte Position, in welcher der Einsatz (170) relativ zum Gehäuse (161) drehbar fixiert ist, und eine gelöste Position aufweist, in welcher der Einsatz im Gehäuse drehbar ist, wobei die Verriegelung einen Vorsprung (164) aufweist, der einfahrbar im Gehäuse (161) befestigt ist und in der verriegelten Position mit einer oder mehreren Aussparrungen (175) zusammengreift, die auf einem Flansch (174) auf dem Einsatz (170) vorgesehen sind, um das Gehäuse und den Einsatz zusammen zu verriegeln, und der in eine Richtung parallel zur Längsachse der Leitspindel in die gelöste Position eingefahren ist, um dem Einsatz eine Drehung relativ zum Gehäuse zu ermöglichen, und wobei der Vorsprung (164) mittels einer Feder (165) zur verriegelten Position gedrängt wird.

2. Fahrzeugauffahrtrampe nach Anspruch 1, wobei das Gehäuse (161) einen zylindrischen Durchgang (162) aufweist, in dem sich der Einsatz (170) befindet, und der Einsatz einen zylindrischen Durchgang (172) aufweist, der mit einem Innengewinde versehen ist und in dem sich die Leitspindel befindet, und wobei die Leitspindel (150), der Gehäusedurchgang (162) und der Einsatzdurchgang (172) koaxial sind.

3. Fahrzeugauffahrtrampe nach einem der vorstehenden Ansprüche, ferner mit einem Verriegelungssteuermechanismus zur Bewegung der Verriegelung zwischen der verriegelten und der gelösten Position, wobei der Verriegelungssteuermechanismus einen Steuerhebel (191) aufweist, der mittels eines Kabels (190) mit der Verriegelung verbunden ist.

4. Fahrzeugauffahrtrampe nach Anspruch 3, ferner mit zwei Leitspindeln (150), zwei Plattformbefestigungen (160) und zwei Verriegelungen, und wobei der Verriegelungssteuermechanismus beide Verriegelungen im Wesentlichen gleichzeitig löst.

5. Fahrzeugauffahrtrampe nach einem der vorstehenden Ansprüche, wobei die Plattform über ein Joch (180) am Gehäuse befestigt ist.

6. Fahrzeug mit der Fahrzeugauffahrtrampe nach einem der vorstehenden Ansprüche.

## Revendications

1. Rampe d'accès pour véhicule (100) comprenant :
un cadre de support (110) définissant un espace de stockage (120) ;
une plateforme (130) mobile d'une position rétractée dans laquelle la plateforme est sensiblement au sein de l'espace de stockage à une position étendue dans laquelle la plateforme s'étend depuis l'espace de stockage ; et
une vis mère (150) ayant un axe longitudinal et un filet externe qui est montée rotative dans l'espace de stockage sur le cadre de support (110) et qui s'étend dans la direction de déplacement de la plateforme, sur laquelle la plateforme (130) est montée au moyen d'une monture filetée à l'intérieur (160) de sorte que, lorsque la vis mère tourne, la monture (160) circule le long de la vis mère et déplace la plateforme vers la position étendue ou la position rétractée,
**caractérisée en ce que** la monture (160) comprend un logement (161), un insert fileté à l'intérieur (170) monté rotatif dans le logement et s'engageant avec la vis mère, et un verrou, le verrou ayant une position verrouillée dans laquelle l'insert (170) est fixé en rotation par rapport au logement (161) et une position libérée dans laquelle l'insert est capable de tourner dans le logement, dans laquelle le verrou comprend une saillie (164) montée rétractable dans le logement (161) qui, dans la position verrouillée, s'engage avec un ou plusieurs évidements (175) prévus sur une collerette (174) sur l'insert (170) afin de verrouiller le logement et l'insert ensemble, et qui est rétractée dans une direction parallèle à l'axe longitudinal de la vis mère à la position libérée afin de permettre à l'insert de tourner par rapport au logement, et dans laquelle la saillie (164) est poussée vers la position verrouillée au moyen d'un ressort (165).

2. Rampe d'accès pour véhicule selon la revendication 1, dans laquelle le logement (161) a un passage cylindrique (162) dans lequel l'insert (170) est situé et l'insert a un passage cylindrique (172) qui est fileté à l'intérieur et dans lequel la vis mère est située, et dans laquelle la vis mère (150), le passage de logement (162) et le passage d'insert (172) sont coaxiaux.

3. Rampe d'accès pour véhicule selon l'une quelconque des revendications précédentes, comprenant en outre un mécanisme de commande de verrou pour déplacer le verrou entre les positions verrouillée et libérée, dans laquelle le mécanisme de commande de verrou comprend une poignée de commande (191) reliée au verrou au moyen d'un câble (190).

4. Rampe d'accès pour véhicule selon la revendication 3, comprenant en outre deux vis mères (150), deux montures de plateforme (160) et deux verrous, et dans laquelle le mécanisme de commande de verrou libère les deux verrous sensiblement simultanément.

5. Rampe d'accès pour véhicule selon l'une quelconque des revendications précédentes, dans laquelle la plateforme est montée sur le logement via un étrier (180).

6. Véhicule comportant la rampe d'accès pour véhicule de l'une quelconque des revendications précédentes.
